(19) Europäisches Patentamt
European Patent Office
Office européen des brevets

(11) **EP 4 509 656 A1**

(12) **EUROPÄISCHE PATENTANMELDUNG**

(43) Veröffentlichungstag:
**19.02.2025   Patentblatt 2025/08**

(21) Anmeldenummer: **23191360.9**

(22) Anmeldetag: **14.08.2023**

(51) Internationale Patentklassifikation (IPC):
*D21H 13/36* (2006.01)    *D21H 21/28* (2006.01)
*D21C 9/00* (2006.01)    *D21H 11/18* (2006.01)
*D21H 17/47* (2006.01)    *D21H 17/51* (2006.01)
*D21H 17/67* (2006.01)    *D21H 27/26* (2006.01)
*C08K 3/013* (2018.01)    *C08L 61/28* (2006.01)

(52) Gemeinsame Patentklassifikation (CPC):
(C-Sets verfügbar)
**C08K 3/013; D21C 9/007; D21H 11/18;
D21H 13/36; D21H 17/47; D21H 17/51;
D21H 17/67; D21H 17/675; D21H 21/28;
D21H 27/26**    (Forts.)

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(71) Anmelder: **Felix Schoeller GmbH & Co. KG
49086 Osnabrück (DE)**

(72) Erfinder:
• **Ostermayer, Martin
87435 Kempten (DE)**
• **Scheck, Thomas
Brewerton, 13029 (US)**

(74) Vertreter: **Cohausz & Florack
Patent- & Rechtsanwälte
Partnerschaftsgesellschaft mbB
Bleichstraße 14
40211 Düsseldorf (DE)**

(54) **PAPIER FÜR DEKORATIVE BESCHICHTUNGSWERKSTOFFE ENTHALTEND PIGMENTHALTIGE SYNTHETISCHE FASERN**

(57)    Die Erfindung betrifft ein Papier für dekorative Beschichtungswerkstoffe, enthaltend Cellulosefasern und synthetische Fasern, wobei die synthetischen Fasern mindestens ein Polymer und mindestens ein Pigment enthalten und das Massenverhältnis von Pigment zu Polymer in den synthetischen Fasern 1:10 bis 1:1 beträgt. Ferner betrifft die Erfindung ein Dekorpapier oder eine Dekorfolie, enthaltend das erfindungsgemäße Papier sowie ein Verfahren zur Herstellung des erfindungsgemäßen Papiers, umfassend folgende Schritte: (a) Bereitstellen eines Zellstoffgemischs, (b) Mahlen des Zellstoffgemischs bis zu einem Mahlgrad von 10 bis 45°SR, (c) optionale Zugabe von Füllstoffen und Nassfestmittel zu dem in (b) erhaltenen gemahlenen Zellstoffgemisch, (d) Verdünnen der in (c) erhaltenen Mischung, (e) optionale Zugabe von Hilfsstoffen, (f) Bilden eines Faservlieses, (g) Entwässerung und Trocknung des Faservlieses, um das Papier zu erhalten, wobei die Zugabe der synthetischen Fasern, die mindestens ein Polymer und mindestens ein Pigment enthalten und in denen das Massenverhältnis von Pigment zu Polymer 1:10 bis 1:1 beträgt nach Schritt (d) und vor Schritt (f) erfolgt.

FIG. 1:

(52) Gemeinsame Patentklassifikation (CPC): (Forts.)

C-Sets
**C08K 3/013, C08L 61/28**

**EP 4 509 656 A1**

**Beschreibung**

Die Erfindung betrifft ein Papier für dekorative Beschichtungswerkstoffe, insbesondere ein Dekorrohpapier, mit synthetischen Fasern, enthaltend Pigment und Polymer, für Anwendungen, bei denen eine hohe Opazität des Papiers erforderlich ist, sowie ein Verfahren zu dessen Herstellung. Darüber hinaus betrifft die Erfindung ein Dekorpapier oder eine Dekorfolie, enthaltend das erfindungsgemäße Papier.

Dekorative Beschichtungswerkstoffe, sogenannte Dekorpapiere oder Dekorfolien, werden vorzugsweise zur Oberflächenbeschichtung bei der Möbelherstellung und im Innenausbau, insbesondere für Laminatböden, eingesetzt. Unter Dekorpapier/Dekorfolie versteht man kunstharzgetränkte oder kunstharzgetränkte und oberflächenbehandelte, bedruckte oder unbedruckte Papiere. Dekorpapiere/Dekorfolien werden mit einer Trägerplatte verleimt oder verklebt.

Je nach Art des Imprägniervorgangs unterscheidet man zwischen Dekorpapieren/Dekorfolien mit durchimprägniertem Papierkern und sogenannten Vorimprägnaten, bei denen das Papier in der Papiermaschine online oder offline nur teilweise imprägniert wird.

Schichtpressstoffe (High Pressure Laminates) sind Laminate, die durch Verpressen mehrerer imprägnierter, aufeinander geschichteter Papiere entstehen. Der Aufbau dieser Schichtpressstoffe besteht im Allgemeinen aus einem harzgetränkten Dekorpapier und einem oder mehreren phenolbeharzten Kraftpapieren. Die Oberflächenbeständigkeit kann durch mitverpressen eines transparenten Auflageblatt (Overlay) erhöht werden. Als Unterlage hierfür werden beispielsweise Hartfaser- und Holzspanplatten sowie Sperrholz eingesetzt.

Bei den nach dem Kurztaktverfahren hergestellten Laminaten (Low Pressure Laminates) wird das mit Kunstharz getränkte Dekorpapier direkt mit einer Unterlage, beispielsweise einer Spanplatte, unter Anwendung eines niedrigeren Drucks verpresst.

Für das Aufkleben der Vorimprägnate auf Holzwerkstoffe wie Spanplatten oder MDF-Platte werden üblicherweise Harnstoffleime, Hotmelts oder Polyvinylacetat (PVAC)-Leime eingesetzt.

Das bei den oben genannten Beschichtungswerkstoffen verwendete Dekorrohpapier wird weiß oder farbig mit oder ohne zusätzlichen Aufdruck eingesetzt.

Hinsichtlich der anwendungstechnischen Eigenschaften müssen die als Ausgangsmaterialien dienenden, sogenannten Dekorrohpapiere bestimmte Anforderungen erfüllen. Dazu gehören eine hohe Opazität für eine bessere Abdeckung der Unterlage, gleichmäßige Formation und Grammatur des Blatts für eine gleichmäßige Harzaufnahme, hohe Lichtbeständigkeit, hohe Reinheit und Gleichmäßigkeit der Farbe für gute Reproduzierbarkeit des aufzudruckenden Musters, hohe Nassfestigkeit für eine reibungslose Imprägnierung (Tränkung), entsprechende Saugfähigkeit zur Erlangung der erforderlichen Harzaufnahme, Trockenfestigkeit, die bei Umrollvorgängen in der Papiermaschine und beim Bedrucken in der Druckmaschine wichtig ist. Ferner ist die Spaltfestigkeit (Festigkeit in z-Richtung) von besonderer Bedeutung, da sie ein Maß dafür ist, wie gut sich das Dekorrohpapier verarbeiten lässt. So darf das aufgeleimte oder laminierte Dekorpapier/Dekorfolie bei Bearbeitungsschritten wie Sägen oder Bohren nicht ausfransen.

Dekorrohpapiere bestehen im Allgemeinen aus hochweißen Sulfatzellstoffen, überwiegend aus Laubholzzellstoff, mit einem hohen Anteil an Pigmenten und Füllstoffen sowie Nassfestmittel, Retentionsmitteln und Fixiermitteln. Dekorrohpapiere unterscheiden sich von üblichen Papieren durch den sehr viel höheren Füllstoffanteil und das Fehlen einer beim Papier üblichen Masseleimung oder Oberflächenleimung mit bekannten Leimungsmitteln wie z.B. Alkylketendimeren. Die Opazität gehört zu den wichtigsten Eigenschaften des Dekorrohpapiers. Diese kennzeichnet das Abdeckvermögen gegenüber der Unterlage.

Die Opazität wird durch Lichtstreuung an den Pigmentpartikeln verursacht. Für ein hohes Lichtstreuvermögen ist es einerseits vorteilhaft, Pigmentteilchen mit einer bestimmten Größe und einer engen Größenverteilung zu verwenden. Des Weiteren ist es auch vorteilhaft, wenn die lichtstreuenden Pigmentteilchen möglichst gleichmäßig in dem undurchsichtig zu machenden Medium verteilt sind. Zusammenballungen der Pigmentteilchen vermindern die Effektivität der Lichtstreuung.

Insbesondere beim Einbringen von Pigmenten bei der Papierherstellung beobachtet man aber üblicherweise eine Zusammenballung der Pigmentteilchen mit der Folge, dass es mikroskopische Bereiche im Papier gibt, in denen sehr viele Pigmentteilchen dicht beieinander angeordnet sind. Andere Bereiche im Blatt enthalten dagegen nur wenige Pigmentteilchen, so dass durch solche Bereiche das Licht weitgehend ungehindert und nicht oder nur wenig gestreut durchtritt. Aus dieser Ungleichverteilung folgt eine verringerte Opazität des Papiers, die mit einem erhöhten Einsatz des Pigments kompensiert werden muss. Der Pigmentanteil lässt sich aber nicht beliebig erhöhen, da in diesem Fall mit einer Beeinträchtigung der physikalischen Eigenschaften wie Retentionsverhalten der Zellstoffsuspension, Festigkeiten und Harzaufnahme zu rechnen ist.

Es sind verschiedene Vorschläge gemacht worden, die Gleichverteilung von Pigmentteilchen zu verbessern.

Die US 4 608 401 beschreibt ein Verfahren zur Verkapselung von Titandioxidteilchen mit einem wasserunlöslichen Polymer in einer wässrigen Suspension und den Einsatz der erhaltenen Teilchen in Anstrichfarben. In der DE 199 61 964 A1 wird ein Verfahren zur Herstellung einer wässrigen Dispersion von Kompositteilchen, bestehend aus einem feinteiligen anorganischen Feststoff und einem Polymerisat, beschrieben. Allerdings sind die beschriebenen Lehren zur Anwendung in Dekorrohpapieren nicht vorteilhaft einsetzbar, weil einerseits die erzielbaren Abstände zwischen den Pigmentteilchen zu gering sind und andererseits das Porenvolumen des Dekorrohpapiers durch die weichen Polymerlatexbestandteile dieser Pigmentzubereitungen verringert wird, was sich nachteilig auf die Imprägnierbarkeit des Rohpapiers auswirkt.

In der GB 487 835 werden Zubereitungen von Farbstoffen und Farbpigmenten mit Melamin-Formaldehyd-Kondensationsprodukten als Bestandteil von Anstrichfarben beschrieben.

Die DE 10 2013 100353 A1 beschreibt ein reaktives Komposit aus Titandioxid, einem Bindemittel und mindestens einem Träger. Der Träger ist vorzugsweise ein anorganisches Material, auf das die Titandioxidteilchen mit einem reaktiven Bindemittel aufgebracht sind, um das sogenannte reaktive Komposite zu bilden. Das Komposit wird anschließend auf eine bestimmte Größe gemahlen und als festes Pulver in der Papierherstellung eingesetzt.

Die EP 3 026 175 A1 beschreibt ein Papier für dekorative Beschichtungswerkstoffe, in dem Pigment-Harzteilchen basierend auf härtendem Harz und Pigmenten zum Einsatz kommen.

Zwar wird in den beiden letztgenannten Fällen durch den Einsatz dieser Komposite bzw. Pigment-Harzteilchen bereits die Gleichverteilung des Titandioxids im Papier verbessert, nachteilig ist allerdings in beiden Fällen, dass die Herstellung der Komposite bzw. Pigment-Harzteilchens sehr aufwendig ist. Darüber hinaus werden die Komposite bzw. die Pigment-Harzteilchen aufgrund ihrer Partikelgröße bei der Papierherstellung ähnlich schlecht retendiert, wie das originär eingesetzte Titandioxid, so dass die niedrige Retention der einzelnen Komposit-Partikel bzw. Pigment-Harzteilchen in der Papiermasse und der damit verbundene Materialverlust, den Einsatz von höheren Mengen an Komposit bzw. Pigment-Harzteilchen erforderlich machen. Dies ist unökonomisch.

Der Erfindung liegt somit die Aufgabe zugrunde ein Papier mit einer hohen Opazität bei gleichzeitig vermindertem Weiß- und/oder Farbpigmentanteil herzustellen, ohne dass die nachteiligen Effekte des Standes der Technik auftreten.

Gelöst wird diese Aufgabe durch ein Papier für dekorative Beschichtungswerkstoffe, enthaltend Cellulosefasern und synthetische Fasern, wobei die synthetischen Fasern mindestens ein Polymer und mindestens ein Pigment enthalten und das Massenverhältnis von Pigment zu Polymer in den synthetischen Fasern 1:10 bis 1:1 beträgt.

Überraschend hat sich herausgestellt, dass die Opazität des erfindungsgemäßen Papiers gegenüber einem herkömmlichen Dekorrohpapier mit gleicher Menge an Pigmentteilchen in herkömmlicher Zubereitung deutlich erhöht ist. Mit dem erfindungsgemäßen Papier kann der Anteil des Titandioxids im Papier unter Erhalt einer gleichmäßig hohen Opazität daher deutlich gesenkt werden. Ein weiter Vorteil des erfindungsgemäßen Papiers ist, dass bei der Weiterverarbeitung bis zu 40% an Imprägnierharz eingespart werden kann. Darüber hinaus kommt es aufgrund der gleichzeitig vorhandenen guten Retentionseigenschaften der erfindungsgemäß im Papier enthaltenen synthetischen Fasern zu deutlich weniger Materialverlust bei der Papierherstellung. Dies ist mit einer erheblichen Einsparung an Kosten verbunden.

Im Gegensatz zu üblichen Papieren ist das erfindungsgemäße Papier, insbesondere Dekorrohpapier, weder in der Masse geleimt noch mit einer Oberflächenleimung versehen. Es enthält im Wesentlichen Zellstoff, Pigment und gegebenenfalls einen Füllstoff und übliche Additive. Übliche Additive können Nassfestmittel, Retentionsmittel und Fixiermittel sein.

Dekorrohpapiere unterscheiden sich von üblichen Papieren durch den sehr viel höheren Füllstoff- und Pigmentanteil im Blatt und das Fehlen einer beim Papier üblichen Masseleimung oder Oberflächenleimung. Ein Dekorrohpapier weist daher Absorptionsfähigkeit für ein Imprägnierharz auf.

Als Zellstoffe zur Herstellung der Papiere, insbesondere Dekorrohpapiere, können Nadelholzzellstoffe (Langfaserzellstoffe) und/oder Laubholzzellstoffe (Kurzfaserzellstoffe) verwendet werden. Auch der Einsatz von Baumwollfasern und Gemische derselben mit den zuvor genannten Zellstoffsorten können verwendet werden. Besonders bevorzugt wird beispielsweise eine Mischung aus Nadelholz-/Laubholz-Zellstoffen im Verhältnis 10:90 bis 90:10, insbesondere 20:80 bis 80:20. Aber auch der Einsatz von 100 Gew.-% Laubholz-Zellstoff hat sich als vorteilhaft erwiesen. Die Mengenangaben beziehen sich auf die Masse der Zellstoffe (atro).

Vorzugsweise kann das Zellstoffgemisch einen Anteil an kationisch modifizierten Zellstofffasern von mindestens 5 Gew.-%, bezogen auf das Gewicht des Zellstoffgemisches, enthalten. Als besonders vorteilhaft hat sich ein Anteil von 10 bis 50 Gew.-%, insbesondere 10 bis 20 Gew.-%, des kationisch modifizierten Zellstoffs im Zellstoffgemisch erwiesen. Die kationische Modifizierung der Zellstofffasern kann durch Reaktion der Fasern mit einem Epichlorhydrinharz und einem tertiären Amin erfolgen oder durch Reaktion mit quaternären Ammoniumchloriden wie Chlorhydroxypropyltrimethylammoniumchlorid oder Glycidyltrimethylammoniumchlorid. Kationisch modifizierte Zellstoffe sowie deren Herstellung sind beispielsweise aus DAS PAPIER, Heft 12 (1980) S.575-579 bekannt.

Die im erfindungsgemäßen Papier enthaltenen synthetischen Fasern enthalten mindestens ein Pigment und mindestens ein Polymer.

Für die Zwecke der Erfindung versteht man unter dem Begriff Pigment feinteilige anorganische oder organische Stoffe, die natürlich oder synthetisch gewonnen werden und zum Erreichen von Opazität oder zu Farbgebungszwecken dienen. In Abgrenzung zu Pigmenten werden für die Zwecke der Erfindung unter dem Begriff Füllstoff feinteilige anorganische oder organischer Stoffe verstanden, die natürlich oder synthetisch gewonnen werden und nicht zum Erreichen von Opazität oder zu Farbgebungszwecken dienen.

Geeignete Farbpigmente zur Herstellung der im erfindungsgemäßen Papier, insbesondere Dekorrohpapier, enthaltenen synthetischen Fasern sind vorzugsweise mineralische Pigmente, die zur Erhöhung der Opazität in Anstrichen und Beschichtungen, in blattförmigen Materialien wie Papier oder Kunststofffolien eingesetzt werden.

Gemäß einer bevorzugten Ausführungsform der Erfindung ist das mindestens eine Pigment in den synthetischen Fasern ausgewählt aus einem oder mehreren Pigmenten mit einem Brechungsindex von größer 2 oder einer Mischung eines oder mehrerer Pigmente mit einem Brechungsindex von größer 2 und eines oder mehrerer Pigmente mit einem Brechungsindex von kleiner 2. Der Brechungsindex wird dabei mit den dem Fachmann bekannten üblichen Methoden bei der Wellenlänge der Natrium-D-Linie (nD) von 589 nm mittels eines Refraktometers bestimmt.

Es hat sich als besonders vorteilhaft herausgestellt, wenn das Pigment mit einem Brechungsindex von größer 2 Titandioxid ist. Wegen der hohen Deckkraft wird Titandioxid als Weißpigment für viele Anwendungen bevorzugt. Dies gilt insbesondere für den Einsatz in Dekorrohpapieren. Als Titandioxid zur Herstellung der im erfindungsgemäßen Dekorrohpapier enthaltenen synthetischen Fasern kann üblicherweise in Dekorpapieren verwendetes Titandioxid eingesetzt werden. Solche Titandioxide sind im Handel erhältlich und können bevorzugt im Rutil -Typ verwendet. Beispielhafte im Handel erhältlichen Titandioxide sind Ti-Pure® R-796+, Ti-Pure® R 902 von DuPont, KRONOS 2800 und KRONOS 2305.

Neben dem einen oder mehreren Pigmenten mit einem Brechungsindex von größer 2 können auch Pigmente mit einem Brechungsindex von kleiner 2 in der synthetischen Faser vorhanden sein. Diese Pigmente mit einem Brechungsindex kleiner 2 können bevorzugt ausgewählt sein aus der Gruppe bestehend aus Kaolin, Calciumcarbonat, Calciumsulfat, Bariumsulfat, Talkum, Silica, Aluminiumoxid, Eisenoxid, Zinksulfid, Calciumcarbonat in seiner natürlichen Form, wie Kalkstein, Marmor oder Dolomitstein, und deren Gemischen. Bei einem Massenverhältnis von Pigment zu Polymer in den synthetischen Fasern von 1:2 oder mehr, führt das Zumischen von einem oder mehreren Pigmenten mit einem Brechungsindex von kleiner 2 zu dem einen oder mehreren Pigmenten mit einem Brechungsindex von größer 2 zu einem effizienteren Einsatz des Pigments mit einem Brechungsindex von größer 2 bei gleichbleibender Opazität. Dabei wirken die Pigmente mit einem Brechungsindex von kleiner 2 als Abstandshalter zwischen den Pigmenten mit einem Brechungsindex von größer 2 und damit zwischen den jeweiligen Streuzentren.

Der Anteil eines Pigments mit einem Brechungsindex von kleiner 2 an der gesamten in den synthetischen Fasern enthaltenen Pigmentmenge beträgt dabei vorzugsweise weniger als 20 Gew.-%, insbesondere weniger als 10 Gew.-%. Um die Funktion des Abstandhalters, bei einem Massenverhältnis von Pigment zu Polymer von 1:2 oder mehr, in den synthetischen Fasern sicher erfüllen zu können, beträgt der Anteil des Pigments mit einem Brechungsindex von kleiner 2 an der gesamten in den synthetischen Fasern enthaltenen Pigmentmenge mindestens 5 Gew.-%.

Die Teilchengröße der Pigmente in den erfindungsgemäß eingesetzten synthetischen Fasern liegt im Bereich von 10 nm bis 5 $\mu$m, bevorzugt im Bereich 50 nm bis 3 $\mu$m. Für die Fälle, in denen die Pigmentpartikel eine nichtsphärische Form aufweisen, wird unter "Teilchengröße" der Durchmesser einer mit dem Teilchen volumengleichen Kugel verstanden.

Die synthetischen Fasern enthalten neben dem Pigment ein Polymer.

Das in den synthetischen Fasern eingesetzte Polymer ist bevorzugt ein im Wesentlichen ausgehärtetes Polymer. Im Wesentlichen ausgehärtet bedeutet, dass das Polymer einen Vernetzungsgrad von mehr als 80%, vorzugsweise mehr als 90%, bevorzugt mehr als 95%, besonders bevorzugt mehr als 98%, aufweist. Im Wesentlichen ausgehärtet bedeutet auch, dass das Polymer nicht vollständig ausgehärtet und noch schmelzbar ist. Insbesondere ist der Vernetzungsgrad geringer als 100 %. Der Vernetzungsgrad wird dabei, wie weiter unten angegeben, ermittelt.

Als geeignete Polymere können beispielsweise Melamin-Formaldehyd-Harze, Melamin-Harnstoff-Formaldehyd-Harze, Phenol-Formaldehyd-Harze, Harnstoffharze, Polyurethane und deren Gemische eingesetzt werden. Es ist aber auch der Einsatz anderer Polymere denkbar.

Besonders bevorzugt werden als Polymer Melamin-Formaldehyd-Harze eingesetzt. Weitere geeignete Polymere sind Polyacryl- oder Polyacrylmethylester, Polyvinylacetat, Polyvinylchlorid und deren Gemische.

Das Massenverhältnis von Pigment zu Polymer in den synthetischen Fasern beträgt 1:10 bis 1:1, insbesondere 1:10 bis 1:2, vorzugsweise 1:7 bis 1:3. Im angegebenen Masseverhältnis lassen sich auf der einen Seite die Fasern mit den üblichen industriellen Verfahren herstellen. Zum anderen wird eine möglichst große Menge Pigment in die Faser eingebaut, wodurch der Pigmenteinsatz in der eigentlichen Papierherstellung reduziert werden kann. Beeinflusst wird das optimale Massenverhältnis u.a. von der Pigment Teilchengröße und der Morphologie der Teilchen. Denkbar sind jedoch auch beliebige andere Pigment zu Polymer-Verhältnisse in den synthetischen Fasern, solange die gewünschte hohe Opazität des Dekorrohpapiers erreicht wird.

Die Herstellung der synthetischen Fasern erfolgt bevorzugt aus hochkonzentrierten Lösungen von Polymer-Vorkondensationsprodukten nach Zusatz eines Härters und der Pigmente durch Zentrifugenspinnen, Fadenziehen, Extrudieren oder durch Fibrillierungsprozesse. Die dabei erhaltenen synthetischen Fasern werden im Allgemeinen vorgetrocknet, gegebenenfalls gereckt und das Polymer wird üblicherweise bei Temperaturen von 120 bis 250°C gehärtet. Erfindungsgemäß darf das Polymer allerdings nicht vollständig ausgehärtet sein, d.h. die Fasern sind zwar stabil in der Handhabung, aber noch schmelzbar. Hierdurch wird sichergestellt, dass die synthetischen Fasern sich bei der Weiterverarbeitung des erfindungsgemäßen Papiers zum Dekorpapier oder zur Dekorfolie mit dem Imprägnierharz homogen verbinden. Die synthetischen Fasern sind gewöhnlich 1 bis 150 μm dick und 200 bis 20.000 μm lang.

Gemäß einer bevorzugten Ausführungsform der Erfindung weisen die synthetischen Fasern einen mittleren Durchmesser von weniger als 150 μm, insbesondere von weniger als 100 μm, auf.

Es hat sich als besonders praxisgerecht erwiesen, wenn das erfindungsgemäße Papier zwischen 3 und 50 Gew.-%, insbesondere zwischen 5 und 30 Gew.-%, besonders bevorzugt zwischen 10 und 25 Gew.-%, an synthetischen Fasern, bezogen auf das Gesamtgewicht des Papiers atro, enthält.

Das erfindungsgemäße Papier, insbesondere Dekorrohpapier, kann neben den synthetischen Fasern ferner weitere mineralische und nicht mineralische Füllstoffe und Pigmente enthalten.

Gemäß einer bevorzugten Ausführungsform sind die im Papier insgesamt enthaltenen Pigmente zu mindestens 5 Gew.-%, vorzugsweise zu mindestens 15 Gew.-%, insbesondere zu mindestens 25 Gew.-%, besonders bevorzugt 35 Gew.-%, bezogen auf die Gesamtmasse der Pigmente im Papier in den synthetischen Fasern eingeschlossen.

Ein weiterer Gegenstand der Erfindung ist ein Verfahren zur Herstellung des erfindungsgemäßen Papiers, insbesondere Dekorrohpapiers, umfassend folgende Schritte:

(a) Bereitstellen eines Zellstoffgemischs,
(b) Mahlen des Zellstoffgemischs bis zu einem Mahlgrad von 10 bis 45°SR,
(c) optionale Zugabe von Füllstoffen und Nassfestmittel zu dem in (b) erhaltenen gemahlenen Zellstoffgemisch,
(d) Verdünnen der in (c) erhaltenen Mischung,
(e) optionale Zugabe von Hilfsstoffen,
(f) Bilden eines Faservlieses,
(g) Entwässerung und Trocknung des Faservlieses, um das Papier zu erhalten,

wobei die Zugabe der synthetischen Fasern, die mindestens ein Polymer und mindestens ein Pigment enthalten und in denen das Massenverhältnis von Pigment zu Polymer 1:10 bis 1:1 beträgt nach Schritt (d) und vor Schritt (f) erfolgt.

Die erfindungsgemäßen Papiere, insbesondere Dekorrohpapiere, können auf einer Fourdrinier-Papiermaschine hergestellt werden. Dazu wird das in Schritt (a) des erfindungsgemäßen Verfahrens bereitgestellte Zellstoffgemisch in Schritt (b) des erfindungsgemäßen Verfahrens, vorzugsweise bei einer Stoffdichte von 2 bis 5 Gew.-%, bis zu einem Mahlgrad von 10 bis 45°SR gemahlen.

Im optionalen Schritt (c) des erfindungsgemäßen Verfahrens kann die Zugabe von Füllstoffen und Nassfestmitteln zu dem in Schritt (b) erhaltenen gemahlenen Zellstoffgemisch, vorzugsweise in einer Mischbütte erfolgen. Als Füllstoffe können dabei beispielsweise Titandioxid und Talkumzugesetzt und mit dem Zellstoffgemisch gut vermischt werden.

Der so in Schritt (c) des erfindungsgemäßen Verfahrens erhaltene Dickstoff wird in Schritt (d) des erfindungsgemäßen Verfahrens, vorzugsweise bis zu einer Stoffdichte von etwa 1 %, verdünnt, und soweit erforderlich im optionalen Schritt (e) weitere Hilfsstoffe, beispielsweise Retentionsmittel, Entschäumer, Aluminiumsulfat und andere zuvor genannte Hilfsstoffe, zugemischt.

Dieser in Schritt (d) bzw. bei Vorhandensein von Schritt (e) in Schritt (e), erhaltene sogenannte Dünnstoff wird zur Bildung eines Faservlieses gemäß Schritt (f) des erfindungsgemäßen Verfahrens, vorzugsweise über den Stoffauflauf der Papiermaschine auf die Siebpartie geführt.

Nach Entwässerung und Trocknung in Schritt (g) des erfindungsgemäßen Verfahrens wird das erfindungsgemäße Papier erhalten. Die Flächengewichte der erzeugten Papiere können 15 bis 300 g/m$^2$ betragen. Insbesondere geeignet sind jedoch Papiere mit einem Flächengewicht von 40 bis 100 g/m$^2$.

Die Zugabe der synthetischen Fasern erfolgt in dem erfindungsgemäßen Verfahren nach Schritt (d) und vor Schritt (f). Eine Zugabe nach Schritt (d) und vor Schritt (f) des erfindungsgemäßen Verfahrens bedeutet, dass die synthetischen Fasern vorzugsweise im Dünnstoff direkt vor dem Auftrag über den Stoffauflauf der Papiermaschine auf die Siebpartie zugegeben werden. Auf diese Weise kann die Beeinträchtigung der Faser durch die Mahlung und die damit verbundene mögliche Verunreinigung der Mahlgruppen vermieden werden. Zur besseren Dispergierbarkeit der synthetischen Fasern im Dünnstoff, können die synthetischen Fasern mit einem Tensid oder einer Tensidmischung beschichtet werden.

Eine Zugabe der synthetischen Faser kann alternativ oder zusätzlich auch in Schritt (a) des erfindungsgemäßen Verfahrens erfolgen, dabei werden die synthetischen Fasern mit dem Zellstoffgemisch bereitgestellt. In diesem Fall gilt es die Mahlung in Schritt (b) des erfindungsgemäßen Verfahrens soweit möglich zu reduzieren, um eine Beeinträchtigung der synthetischen Fasern zu vermeiden.

Gegenstand der Erfindung ist ferner ein Dekorpapier oder eine Dekorfolie, enthaltend das erfindungsgemäße Papier.

Zur Herstellung von Dekorpapieren oder Dekorfolien werden die Papiere, insbesondere Dekorrohpapiere, mit für diesen Zweck üblichen Kunstharzdispersionen imprägniert oder getränkt. Diese umfassen beispielsweise Melamin-Formaldehyd-Harze, Melamin-Harnstoff-Formaldehyd-Harze, Phenol-Formaldehyd-Harze, Harnstoffharze, Polyurethane und deren Gemische oder solche auf der Basis von Polyacryl- oder Polyacrylmethylestern, Polyvinylacetat, Polyvinylchlorid und deren Gemische.

Die Vorimprägnierung für Dekorfolien kann in einem getrennten Maschinendurchgang auch in der Leimpresse oder mit einer Filmpresse in der Papiermaschine erfolgen. Die Imprägnierung oder Tränkung des Papiers mit dem Imprägnierharz führt dazu, dass im Blatt im Wesentlichen keine Lufteinschlüsse mehr vorhanden sind. Das Imprägnierharz ist homogen im Blatt verteilt.

Der Anteil des Imprägnierharzes, berechnet als Feststoff, im Papier macht 10 bis 40 Gew.-%, bezogen auf die Masse des Papiers aus. Weil anders als in einem üblichen Papier oder auch in einem Dekorrohpapier in einem imprägnierten Papier im Wesentlichen keine Lufteinschlüsse mehr vorhanden sind, bezeichnet man ein Dekorpapier auch als Dekorfolie.

Die Papiere können vor oder nach der Tränkung bedruckt und/oder lackiert werden und anschließend auf ein Substrat wie eine Holzplatte aufgebracht werden.

Die Erfindung wird durch die folgende Figur und die folgenden Beispiele weiter erläutert.

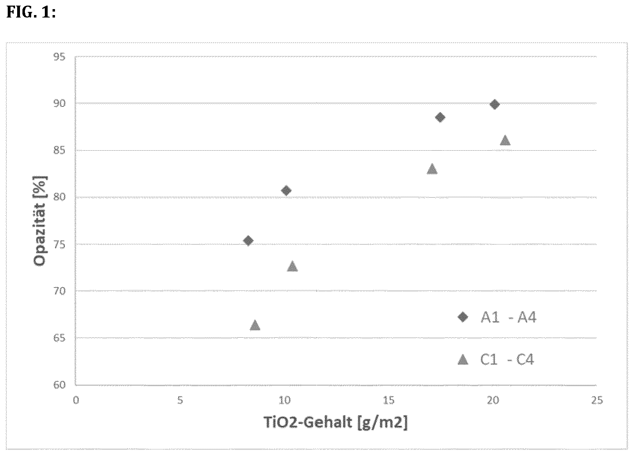

FIG. 1    Diagramm zur Opazität des Dekorpapiers nach Verpressen gegen den flächenbezogenen Titandioxidgehalt für die erfindungsgemäßen Beispiele A1 bis A4 und die Vergleichsbeispiele C1 bis C4

**Prüfmethoden**

Opazität

Bestimmung entsprechend der Norm ISO 16065-1.

Bestimmung des Glührückstandes

Der Titandioxidgehalt im Dekorrohpapier wurde nach DIN 54370 ermittelt.

Mittlerer Faserdurchmesser

Der mittlere Durchmesser der Fasern wird entsprechend der Norm OENORM EN ISO 137 im Mikroskop-Projektionsverfahren bestimmt.

Faserlänge

Die Faserlänge wird entsprechend der Norm ISO 16065-1 bestimmt. Dabei wir die Faserlänge durch automatische, optische Analyse im Verfahren mit polarisiertem Licht gemessen.

Vernetzungsgrad

Die Prüfung dient zur Bestimmung des Aushärtegrades von Imprägnaten.

Hierzu werden Prüflinge mit einer Fläche von 100 cm$^2$ ausgestanzt und gewogen (entspricht Probengewicht "vor Extraktion").

Anschließend werden die Prüflinge in N, N-Dimethyl-formamid (DMF) eingetaucht (eine 100 cm$^2$-Scheibe in je 100 ml). Nach einer Einwirkzeit von 30 Minuten bei Raumtemperatur werden die Prüflinge herausgenommen, auf Löschpapier abgelegt und danach im Trockenschrank bei 120 °C 90 Minuten lang getrocknet. Nach Abkühlung werden die Prüflinge gewogen (entspricht Probengewicht "nach Extraktion").

Der Vernetzungsgrad wird anschließend mittels der folgenden Formeln ermittelt

Auswertung:

$$\text{Gelöste Anteile} = \text{Einwaage} - \text{Auswaage}$$

$$\text{Einwaage} = \text{Probengewicht "vor Extraktion"} - \text{Flächenmasse Rohpapier g/m}^2 \times$$

$$\text{Probenfläche cm}^2 / 10.000$$

$$\text{Auswaage} = \text{Probengewicht "nach Extraktion"} - \text{Flächenmasse Rohpapier g/m}^2 \times$$

$$\text{Probenfläche cm}^2 / 10.000$$

$$\text{Gelöste Anteile \% = gelöste Anteile / Einwaage} \times 100$$

$$\text{Vernetzte Anteile \% (Vernetzungsgrad) = Auswaage / Einwaage} \times 100$$

**Beispiele**

Herstellung der Dekorrohpapiere

Die Herstellung der Dekorrohpapiere erfolgte für alle Beispiele nach dem gleichen Verfahren. Einzelne Bestandteile der Rezeptur wurden entsprechend der beschriebenen Beispiele angepasst.

50 g Eukalyptuszellstoff werden in einem Dispergiergefäß mit Wasser aufgefüllt, so dass eine Stoffdichte von etwa 3 % eingestellt wird.

Für die erfindungsgemäßen Beispiele wird ein Anteil von 20% des Eukalyptuszellstoffs durch Melamin-Formaldehyd-Fasern mit einem Titandioxidgehalt von 30 Gew. % ersetzt. Die Melamin-Formaldehyd-Fasern haben einen Durchmesser von 80 $\mu$m und eine Länge von 1,5 mm.

Mit einem Labordissolver und einer Dispergierscheibe wird der Zellstoff 30 Minuten lang aufgeschlagen. Anschließend wird der entstandene Zellstoffbrei in ein Verteilergerät gefüllt und mit Wasser auf 8 Liter Gesamtmenge aufgefüllt, so dass eine Stoffdichte von etwa 1 % erhalten wird. In den Verteiler wird zusätzlich 25 g einer 1,5 Gew.-%igen Lösung eines Adipinsäurediethylentriaminepichlorhydrin-Copolymers (Giluton® XP 14, BK Giulini GmbH) als Nassfestmittel gegeben und die Suspension mit 10%iger Schwefelsäure auf pH 6 eingestellt.

Aus der so hergestellten Zellstoffsuspension werden zur Erzeugung von Dekorrohpapierblättern am Blattbildner Einzelansätze in folgender Weise hergestellt.

Zu je 300 g der Zellstoffsuspension wird eine Titandioxid-Zubereitungen zugegeben (umgerechnet etwa 2 g reines $TiO_2$ pro Blatt) und die Suspension mit einem Flügelrührer durchmischt. Danach werden weitere 0,95 g der 1,5 Gew.-% Adipinsäurediethylentriaminepichlorhydrincopolymer-Lösung zugesetzt und durchmischt.

Der so hergestellte Einzelansatz wird in die Füllkammer des Blattbildners zu 2 l Wasser gegeben, auf 4 l Gesamtvolumen aufgefüllt und der Blattbildungsprozess wird gestartet.

Unter Verwendung von erfindungsgemäßen Pigment-Harzfasern wurden so die Einzelblätter A1 bis A4 und aus der Vergleichs-Titandioxiddispersion die Einzelblätter C1 bis C4 hergestellt.

Die Einzelblätter A1 bis A4 sowie C1 bis C4 werden nach dem identischen Verfahren und mit identischen Rohstoffen hergestellt, wobei der Aschegehalt und das Flächengewicht variiert wurden, und dienen der statistischen Absicherung.

Tränken und Verpressen der erfindungsgemäßen und Vergleichs-Dekorrohpapierblätter

Zum Tränken der Einzelblätter wird eine Lösung mit 52 Gew.-% Melamin-Formaldehydharz (KAURAMIN® 773 der BASF SE) in Wasser verwendet, der 1,6 Gew.-% Netzmittel (Hypersal® VXT 3797 der Surface Specialities Germany) und 0,8 Gew.-% Härter (MADUR1T®-Härter MH 835/70W, erhältlich von Ineos Melamines, Deutschland) zugesetzt wird.

Die Dekorrohpapierblätter werden bis zur völligen Durchtränkung, mindestens aber 60 Sekunden lang auf die Harzlösung aufgelegt und anschließend komplett ins Harzbad getaucht. Überschüssiges Harz wird danach abgerakelt und das Blatt 25 Sekunden bei 130°C getrocknet. Danach wird das Blatt nochmals komplett in die Harzlösung getaucht, überschüssiges Harz wieder abgerakelt und bei 130°C bis zu einer Restfeuchte von 6 Gew.-% getrocknet.

Die getränkten Dekorpapierbögen werden nach dem Hochdruckverfahren (HPL) bei einer Temperatur von 140°C und einen Pressdruck von 234 bar mit einer Schichtstoffplatte von 40x40 cm Größe 4 Minuten lang verpresst und in der Presse auf 60°C abgekühlt. Unter das zu prüfende Blatt werden dabei an zwei verschiedenen Stellen ein wesentlich kleinerer schwarzer und ein weißer imprägnierter Dekorpapierbogen zur Messung der Opazität mit verpresst.

Die Opazität des zu prüfenden Dekorpapierblatts wird ermittelt, in dem Reflexionsdichten gemessen und verglichen werden. Dazu werden ein weißes und ein schwarzes Blatt nebeneinander angeordnet. Darüber wird das auf Opazität zu prüfende Blatt auflaminiert und auf eine Platte aufkaschiert. Die Reflexionsdichtemessungen über dem weißen und über dem schwarzen Blatt erfolgten mit einem Farbmessgerät Datacolor 600. Die über dem schwarzen Blatt ermittelte Reflexionsdichte wurde durch die über dem weißen Blatt ermittelte Reflexionsdichte geteilt und das Ergebnis mit 100 multipliziert.

Das Flächengewicht (ermittelt nach EN ISO 536) der erhaltenen Blätter, deren Glührückstand (Aschegehalt - ermittelt nach DIN 54370) und die erzielte Opazität (ermittelt gemäß ISO 16065-1) sind in nachstehender Tabelle zusammengestellt, wobei vorliegend der Aschegehalt gleichgesetzt werden kann mit der Menge Titandioxid, die bezogen auf das Blattgewicht oder die Blattfläche enthalten ist.

In Figur 1 ist die Opazität des Dekorpapiers nach Verpressen gegen den flächenbezogenen Titandioxidgehalt für die erfindungsgemäßen Beispiele A1 bis A4 und die Vergleichsbeispiele C1 bis C4 aufgetragen. Die Ergebnisse der Opazitätsmessung zeigen, dass die Dekorpapiere, die das erfindungsgemäße Dekorrohpapier (A1 bis A4) mit Melamin-Formaldehyd-Fasern mit Titandioxid enthalten, bei vergleichbarem Titandioxidgehalt eine deutlich höhere Opazität aufweisen als die Dekorpapiere, die ein Vergleichsdekorrohpapier (C1 bis C4) mit der Vergleichszubereitung enthalten.

Durch die Verwendung eines erfindungsgemäßen Dekorrohpapiers kann somit eine Einsparung von Titandioxid von mindestens 20% der Menge erreicht werden, ohne dass sich die Opazität des Dekorpapiers verschlechtert.

**Tabelle 1**

| Blatt | Blattgewicht [g/m²] | Anteil Polymerfaser bezogen auf Gesamtgewicht [%] | Aschegehalt [%] | Anteil Polymerfaser [g/m²] | Aschegehalt [g/m²] | Titandioxid aus der Faser [g/m²] | Opazität [%] |
|-------|------|------|------|------|------|------|------|
| A1 | 84,3 | 20 | 9,9 | 16,9 | 8,3 | 5,06 | 77,4 |
| A2 | 85,0 | 20 | 20,6 | 17,0 | 17,5 | 5,10 | 88,5 |
| A3 | 101,2 | 20 | 10,0 | 20,2 | 10,1 | 6,07 | 81,7 |
| A4 | 99,8 | 20 | 20,1 | 20,0 | 20,1 | 5,99 | 89,9 |
| C1 | 83,9 | - | 10,2 | - | 8,6 | - | 66,4 |
| C2 | 85,7 | - | 19,9 | - | 17,1 | - | 83,1 |
| C3 | 100,9 | - | 10,3 | - | 10,4 | - | 72,7 |
| C4 | 100,1 | - | 20,6 | - | 20,6 | - | 86,1 |

**Patentansprüche**

1. Papier für dekorative Beschichtungswerkstoffe, enthaltend Cellulosefasern und synthetische Fasern, **dadurch gekennzeichnet, dass** die synthetischen Fasern mindestens ein Polymer und mindestens ein Pigment enthalten und das Massenverhältnis von Pigment zu Polymer in den synthetischen Fasern 1:10 bis 1:1 beträgt.

2. Papier nach Anspruch 1, **dadurch gekennzeichnet, dass** das Papier ein Dekorrohpapier ist.

3. Papier nach Anspruch 1 oder 2, **dadurch gekennzeichnet, dass** die eingesetzten synthetischen Fasern einen mittleren Durchmesser von weniger als 150 μm aufweisen.

4. Papier nach einem der Ansprüche 1 bis 3, **dadurch gekennzeichnet, dass** das Papier zwischen 3 und 50 Gew.-% an synthetischen Fasern, bezogen auf das Gesamtgewicht des Papiers atro, enthält.

5. Papier nach einem der Ansprüche 1 bis 4, **dadurch gekennzeichnet, dass** das Pigment ausgewählt ist aus einem oder mehreren Pigmenten mit einem Brechungsindex von größer 2 oder einer Mischung eines oder mehrerer Pigmente mit einem Brechungsindex von größer 2 und eines oder mehrerer Pigmente mit einem Brechungsindex von kleiner 2.

6. Papier nach Anspruch 5, **dadurch gekennzeichnet, dass** das Pigment mit einem Brechungsindex von größer 2 Titandioxid ist.

7. Papier nach Anspruch 5 oder 6, **dadurch gekennzeichnet, dass** das Pigment mit einem Brechungsindex von kleiner 2 ausgewählt ist aus der Gruppe bestehend aus Kaolin, Calciumcarbonat, Calciumsulfat, Bariumsulfat, Talkum, Silica, Aluminiumoxid, Eisenoxid, Calciumcarbonat in seiner natürlichen Form, wie Kalkstein, Marmor oder Dolomitstein, und deren Gemischen.

8. Papier nach einem der Ansprüche 1 bis 7, **dadurch gekennzeichnet, dass** die im Papier insgesamt enthaltenen Pigmente zu mindestens 5 Gew.-% bezogen auf die Gesamtmasse der Pigmente im Papier in den synthetischen Fasern eingeschlossen sind.

9. Papier nach einem der Ansprüche 1 bis 8, **dadurch gekennzeichnet, dass** das Polymer ausgewählt ist aus Melamin-Formaldehydharz, Melamin-Harnstoff-Formaldehydharz, Harnstoffharz, Harnstoff-Formaldehydharz, Phenol-Formaldehydharz, Polyurethan, Polyacrylester, Polyacrylmethylester, Polyvinylacetat, Polyvinylchlorid und deren Gemischen.

10. Papier nach Anspruch 9, **dadurch gekennzeichnet, dass** das Polymer ein Melamin-Formaldehyd-Harz ist.

11. Papier nach einem der vorhergehenden Ansprüche, **dadurch gekennzeichnet, dass** das Polymer der synthetischen Fasern einen Vernetzungsgrad von mehr als 80% aufweist.

12. Dekorpapier oder Dekorfolie, enthaltend ein Papier nach einem der Ansprüche 1 bis 11.

13. Verfahren zur Herstellung eines Papiers nach einem der Ansprüche 1 bis 11, umfassend folgende Schritte:

    (a) Bereitstellen eines Zellstoffgemischs,
    (b) Mahlen des Zellstoffgemischs bis zu einem Mahlgrad von 10 bis 45°SR,
    (c) optionale Zugabe von Füllstoffen und Nassfestmittel zu dem in (b) erhaltenen gemahlenen Zellstoffgemisch,
    (d) Verdünnen der in (c) erhaltenen Mischung,
    (e) optionale Zugabe von Hilfsstoffen,
    (f) Bilden eines Faservlieses,
    (g) Entwässerung und Trocknung des Faservlieses, um das Papier zu erhalten,

wobei die Zugabe der synthetischen Fasern, die mindestens ein Polymer und mindestens ein Pigment enthalten und in denen das Massenverhältnis von Pigment zu Polymer 1:10 bis 1:1 beträgt nach Schritt (d) und vor Schritt (f) erfolgt.

14. Verfahren nach Anspruch 14, wobei die synthetischen Fasern mit einem Tensid oder einer Tensidmischung beschichtet sind.

**FIG. 1:**

**EP 4 509 656 A1**

Europäisches Patentamt
European Patent Office
Office européen des brevets

# EUROPÄISCHER RECHERCHENBERICHT

Nummer der Anmeldung

EP 23 19 1360

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 026 175 B1 (SCHOELLER TECHNOCELL GMBH & CO KG [DE]) 3. April 2019 (2019-04-03) * Ansprüche 1-6 * * Seite 6, Absatz 60 – Seite 7, Absatz 62; Tabelle 1 * ----- | 1-14 | INV. D21H13/36 D21H21/28 D21C9/00 D21H11/18 D21H17/47 |
| X | DE 10 2012 111719 A1 (SCHOELLER TECHNOCELL GMBH & CO KG [DE]) 5. Juni 2014 (2014-06-05) * Ansprüche 1-3,6-8 * * Seite 6, Absatz 39 – Absatz 45; Tabelle 1 * ----- | 1-14 | D21H17/51 D21H17/67 D21H27/26 C08K3/013 C08L61/28 |
| A | CA 3 195 171 A1 (MUNKSJO PAPER AB [SE]) 28. April 2022 (2022-04-28) * Ansprüche 1,6 * ----- | 1-14 | |
| A | EP 1 836 267 B1 (BASF CATALYSTS LLC [US]) 27. Juli 2011 (2011-07-27) * Ansprüche 1,16,17 * ----- | 1-14 | |

RECHERCHIERTE SACHGEBIETE (IPC)

D21H
D21C
C08K
C08L

Der vorliegende Recherchenbericht wurde für alle Patentansprüche erstellt

| Recherchenort | Abschlußdatum der Recherche | Prüfer |
|---|---|---|
| München | 7. Februar 2024 | Mill, Sibel |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 23 19 1360

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-02-2024

| Im Recherchenbericht angeführtes Patentdokument | Datum der Veröffentlichung | Mitglied(er) der Patentfamilie | Datum der Veröffentlichung |
|---|---|---|---|
| EP 3026175 B1 | 03-04-2019 | CN 105648838 A | 08-06-2016 |
| | | EP 3026175 A1 | 01-06-2016 |
| | | JP 2016102288 A | 02-06-2016 |
| | | US 2016153147 A1 | 02-06-2016 |
| DE 102012111719 A1 | 05-06-2014 | KEINE | |
| CA 3195171 A1 | 28-04-2022 | CA 3195171 A1 | 28-04-2022 |
| | | CN 116547424 A | 04-08-2023 |
| | | EP 4232630 A1 | 30-08-2023 |
| | | FR 3115229 A1 | 22-04-2022 |
| | | US 2023407572 A1 | 21-12-2023 |
| | | WO 2022084586 A1 | 28-04-2022 |
| EP 1836267 B1 | 27-07-2011 | AT E517952 T1 | 15-08-2011 |
| | | BR PI0606575 A2 | 07-07-2009 |
| | | CA 2594824 A1 | 20-07-2006 |
| | | CN 101120058 A | 06-02-2008 |
| | | EP 1836267 A2 | 26-09-2007 |
| | | PL 1836267 T3 | 30-12-2011 |
| | | US 2006157212 A1 | 20-07-2006 |
| | | WO 2006076725 A2 | 20-07-2006 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4608401 A
- DE 19961964 A1
- GB 487835 A
- DE 102013100353 A1
- EP 3026175 A1

**In der Beschreibung aufgeführte Nicht-Patentliteratur**

- *DAS PAPIER, Heft*, 1980, vol. 12, 575-579